# EUROPEAN PATENT SPECIFICATION

(11) **EP 2 070 277 B1**
(45) Date of publication and mention of the grant of the patent: **18.05.2011**
(21) Application number: 06825471.3
(22) Date of filing: 05.10.2006
(51) Int. Cl.: H04L 12/58

(54) **System and method providing email account provisioning**
System und Verfahren zur Bereitstellung von Email-Account-Einrichtung
Système et procédé permettant de disposer d'un compte de courrier électronique

(43) Date of publication of application: 17.06.2009
(73) Proprietor: Teamon Systems, Inc., Issaquah, Washington 98027 (US)
(72) Inventor: LIRA, Chris, Bellevue, WA 98006 (US); DESPHANDE, Nikhil, Issaquah, WA 98027 (US)
(74) Representative: Roberts, Gwilym Vaughan
(86) International application number: PCT/US2006/038880
(87) International publication number: WO 2008/041985

(56) References cited:
- EP-A- 1 416 397
- EP-A- 1 482 702
- FLING, BRIAN: "The Mobile Device Detection Problem"[Online] 26 May 2006 (2006-05-26), XP002430637 Retrieved from the Internet: URL:http://web.archive.org/web/20060526105 953/http://mobiledesign.org/articles/the_m obile_device_detection_problem.php> [retrieved on 2007-04-23] cited in the application
- PASSANI L.: 'Introducing WALL: a Library to Multiserve Applications on the Wireless Web', [Online] 29 August 2006, XP007912144 Retrieved from the Internet: <URL:http://web.archive.org/web/20060829142 255/http://wurfl.sourceforge.net/java/tutor ial.php> [retrieved on 2010-03-10]

## Description

### Field of the Invention

The present invention relates to the field of communications systems, and, more particularly, to wireless electronic mail (email) communications systems and related methods.

### Background of the Invention

Electronic mailboxes are used to store electronic mail (email) messages. Electronic mailboxes are connected to the Internet to enable users to send and receive incoming and outgoing email messages. These mailboxes may also be extended to deliver email to mobile wireless communication devices via wireless networks. In the case of a corporation, electronic mailboxes are typically located on email servers at the corporation. On the other hand, mailboxes for small businesses or individuals are typically located on Internet service provider (ISP) email servers.

Mail user agents (MUAs) are applications which use a technique called polling to relay messages from the mail server to the mail program at a user's computer or mobile wireless communications device. A MUA is a program running either on a user's personal computing device (mobile or stationary), or on a shared email relay server that checks for new mail on behalf of a multitude of such users. More particularly, polling is the retrieval of incoming messages from other users at the mail server and delivery of these messages to the user's mailbox.

Generally speaking, a user will have to establish a profile or account so that a mail user agent on an email relay server can perform the desired polling operations. The mail user agent will need to know information such as the unique identifiers of the user's wireless device, as well as the appropriate account information for the email account(s) from which the user wants emails relayed to the handheld device. It is generally undesirable to use live customer support personnel to interface with users to provision new email accounts, as this increases the number of support staff required to support the customer base and, therefore, increases operating costs.

The more desirable approach is to use a Web interface so that customers can log on to an email relay system including the MUA and provide the necessary information through the Web interface to allow the email relay system to automatically provision the account. While such Web interfaces are relatively straightforward to serve to users using a Hypertext Markup Language (HTML) based browser, such as on a personal computer (PC) or Mac, for example, this task becomes more difficult when attempting to serve up a Web interface to mobile device browsers. This is because wireless communications device browsers are typically not HTML-based browsers. Rather, many wireless communications device browsers typically use a less feature-rich markup language, namely the Wireless Markup Language (WML), due to the processing and memory constraints of mobile devices compared to a PC or Mac. However, as device computing capabilities continue to improve, some device manufacturers are beginning to implement browsers that support more sophisticated markup languages, such as the Extensible HyperText Markup Language (XHTML), for example.

Because of the numerous types of wireless communications devices that are available, and the differences in browsers supported by different devices, serving up Web-based content to mobile devices in general can be problematic for content providers. To serve up content that is tailored to a specific device, some providers try to detect the type of device attempting to access their Web site so that they can determine what browser and feature capabilities the device has. One article which discusses some of the challenges and difficulties of wireless communications device detection is "The Mobile Device Detection Problem" by Brian Fling, available at http://mobiledesign.org. In this article, Fling discusses three potential approaches to making device detection work, namely a third-party translation service, a device detection API that publishers can point to for centralizing the device user-agents, and a reverse device detection scheme. Yet, Fling concludes that the tools to allow common Web content publishers to create mobile versions of their Web pages are not yet readily available, and that device detection remains a significant obstacle for Web content publishers.

Accordingly, improved approaches for tailoring Web-based content for different types of wireless communications device browsers are needed. This may particularly appropriate where a user is required to provide information through a wireless communications device Web browser, such as for email MUA provisioning, for example.

EP 1,482,702 to Kruis is directed to a system for provisioning an associated service for a device. The associated service allows a user to access a primary service and, optionally, one or more additional services through a mobile handheld device. The associated service is provisioned entirely through the handheld device. A system for provisioning the associated service receives provisioning requests from the device and creates and configures the associated service and, if needed, the primary service. The primary and additional services may be e-mail services, calendar services, contact management services or other data services. The associated service may be used simultaneously with different types of primary and additional services. The Mobile Device Detection Problem by Fling is an article directed to publishing mobile versions of Web content.

The invention provides an email server in accordance with claim 1 and a method in accordance with claim 8. Preferred embodiments are set forth on the dependent claims.

### Brief Description of the Drawings

FIG. 1 is a schematic block diagram of an email system in accordance with one exemplary embodiment.

FIGS. 2 and 3 are front views of a wireless communications device display of FIG. 1 illustrating markup language templates for collecting provisioning parameters from the wireless communications device.

FIGS. 4 and 5 are flow diagrams illustrating exemplary communications method aspects.

FIG. 6 is a schematic block diagram illustrating exemplary components of a mobile wireless communications device for use with the present invention.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in different embodiments.

Generally speaking, an email communications system is disclosed herein which may include a plurality of wireless communications devices each supporting at least one markup language from among a plurality of different markup languages, and an electronic mail (email) server. The email server may include an account provisioning module for determining the at least one markup language supported by a given wireless communications device, providing at least one respective markup language provisioning template to the given wireless communications device based upon the supported at least one markup language, and generating a provisioned email account for the given wireless communications device based upon at least one provisioning parameter returned via the at least one markup language provisioning template. The email server may further include a mail-user agent module for forwarding emails to the given wireless communications device based upon the provisioned email account therefor.

More particularly, each wireless communications device may have at least one unique identification (ID) associated therewith, and the at least one provisioning parameter returned via the at least one markup language provisioning template may include the at least one unique ID of the given wireless communications device. Also, the at least one provisioning parameter returned via the at least one markup language provisioning template may include at least one email address.

In addition, at least one of the plurality of wireless communications devices may support at least two of the plurality of different markup languages. As such, the account provisioning module may provide the at least one respective markup language provisioning template based upon a most capable one of the at least two markup languages. The account provisioning module may provide a default markup language provisioning template to the given wireless communications device if the account provisioning module is unable to determine the at least one supported markup language, for example. More particularly, the default markup language provisioning template may include only common markup language elements supported by all of the plurality of different markup languages.

By way of example, the plurality of markup languages may include a Wireless Markup Language (WML) and an Extensible Hypertext Markup Language (XHTML). Also, the wireless communications devices may be cellular communications devices, for example.

An email communications method aspect for a plurality of wireless communications devices each supporting at least one markup language from among a plurality of different markup languages may include determining the at least one markup language supported by a given wireless communications device, and providing at least one respective markup language provisioning template to the given wireless communications device based upon the supported at least one markup language. The method may further include generating a provisioned email account for the given wireless communications device based upon at least one provisioning parameter returned via the at least one markup language provisioning template. Furthermore, emails may be forwarded to the given wireless communications device based upon the provisioned email account therefor.

A computer-readable medium having computer-executable modules may include an account provisioning module for determining the at least one markup language supported by a given wireless communications device from among a plurality of wireless communications devices, each wireless communications device supporting at least one markup language from among a plurality of different markup languages. The account provisioning module may also be for providing at least one respective markup language provisioning template to the given wireless communications device based upon the supported at least one markup language, and generating a provisioned email account for the given wireless communications device based upon at least one provisioning parameter returned via the at least one markup language provisioning template. The computer-readable medium may further include a mail-user agent module for forwarding emails to the given wireless communications device based upon the provisioned email account therefor.

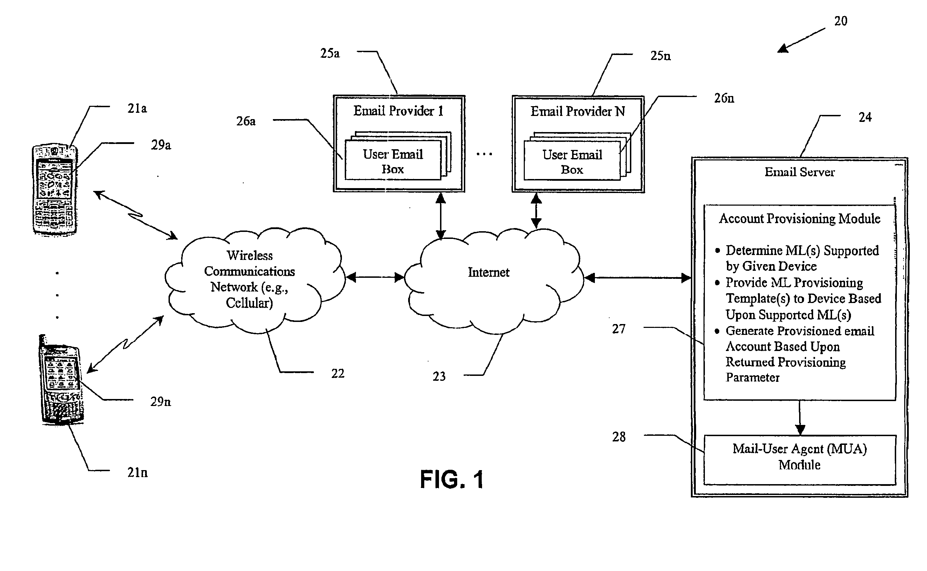

Referring initially to FIG. 1, an email communications system **20** illustratively includes a plurality of wireless communications devices **21a-21n,** each of which has a respective display **29a-29n.** Moreover, each wireless communications device **21a-21n** supports at least one markup language from among a plurality of different markup languages. That is, the wireless communications devices **21a-21n** have Web browsers that use/support different types of markup languages. Generally speaking, wireless communications device browsers are used for retrieving and viewing Web-based content from Web servers via wireless communications (e.g., cellular or wireless LAN) networks connected to the World Wide Web/Internet **23.**

In particular, one common type of browser used on wireless handheld devices is the Wireless Application Protocol (WAP) based browser, which supports the Wireless Markup Language (WML). Another markup language supported by some wireless communications device browsers is XHTML. Generally speaking, XHTML is a more restrictive version of HTML that does not support all of the features of HTML, but at the same time supports some advanced features not supported by WML. By way of example, some of the more advanced features supported by XHTML with respect to WML include browser buttons, graphics/icons, etc. Some browsers will support more than one markup language (e.g., WML and XHTML). Moreover, other formats continue to be developed. For example, another scaled-down version of the HTML language that is being implemented in some networks is Compact HTML (CHTML). For clarity of explanation, the following examples will focus on WML and XHTML, but it will be appreciated by those skilled in the art that the system and methods set forth herein may also be used with other markup languages such as CHTML, etc.

As discussed above, there is a wide variety of wireless communications devices available, and many of these devices use different types of browsers that support different versions and types of markup languages (e.g., WML 1.x, WML 2.x, XHTML 1.x, etc.). Accordingly, it can be very difficult for Web content providers or publishers to serve appropriately formatted Web pages or information to such browsers because the publishers typically will not know what type of browser/markup language is being used by a given device. This problem may be particularly acute where the Web server requires the user to interact with a page or template served to the device to provide the server with information, such as password and other account information. This is especially true with email systems where a user wishes to provision an account so that a mail user agent (MUA) can forward emails for one or more user email accounts to the user's wireless communications device. More particularly, the email accounts are hosted by email providers 25a-25n, each of which provides one or more dedicated user email boxes **26a-26n** for respective users for receiving emails addressed to the user's unique email address, as will be appreciated by those skilled in the art. As used herein, "email provider" is generally meant to include any entity that provides users with access to email, including but not limited to corporate email providers, ISPs, etc.

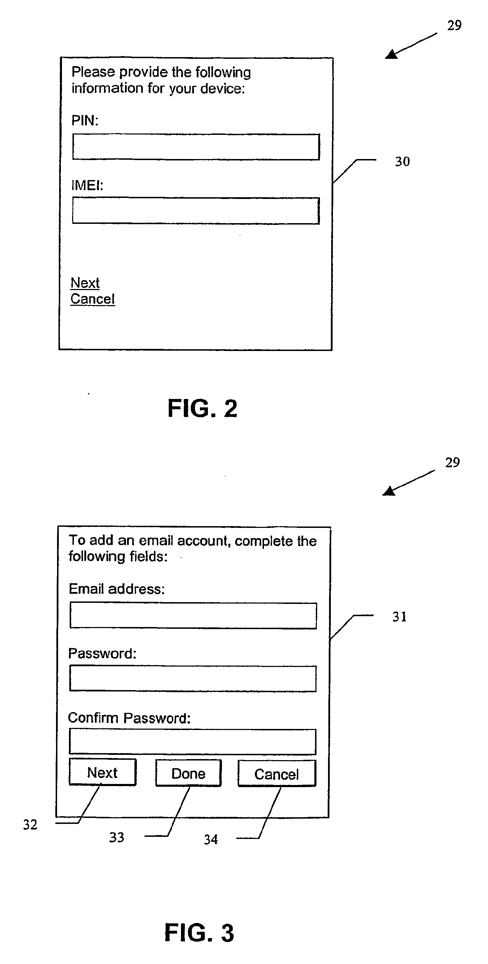

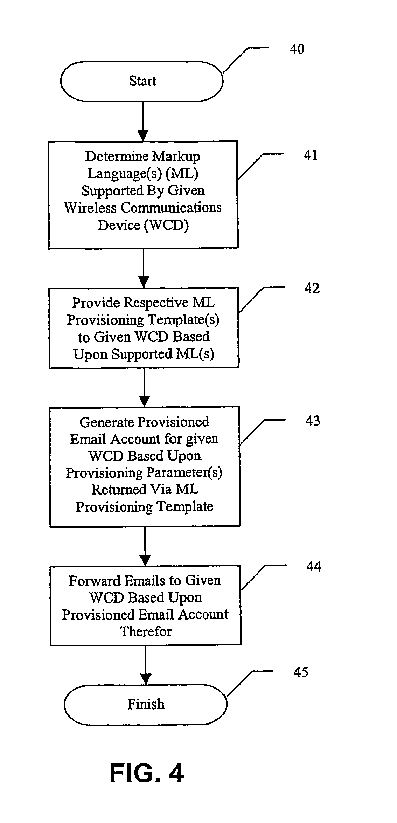

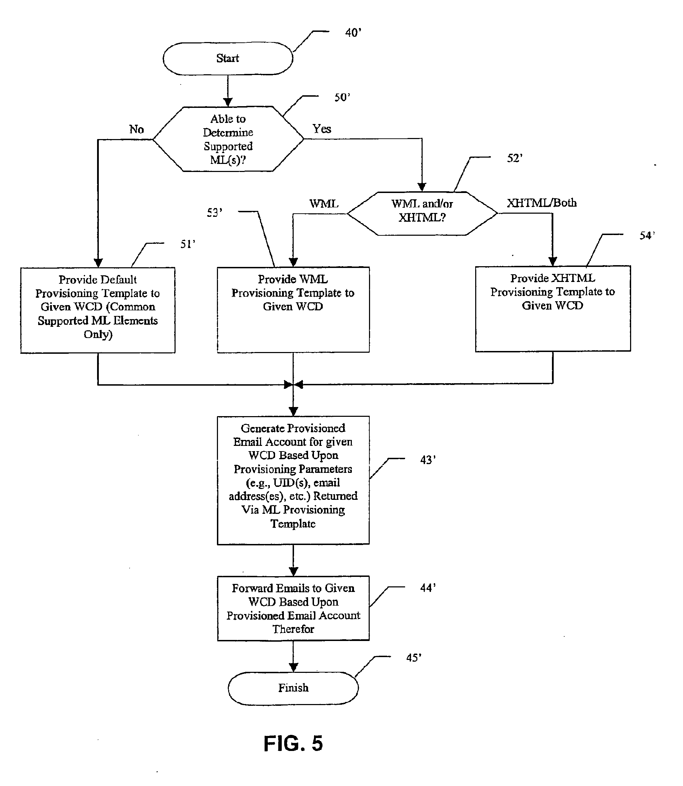

In the present example, an email server **24** illustratively includes an account provisioning module **27** and a MUA module **28.** The operation of these modules will now be further described with reference to FIGS. 2-5. Beginning at Block **40,** when a given wireless communications device **21** attempts to configure a mail forwarding or aggregation profile/account with the email server **24,** the account provisioning module **27** determines the markup language(s) supported by the given wireless communications device, at Block **41.**

One way in which this may be done is when the given wireless communications device first communicates with the server **24,** the account provisioning module **27** examines the headers found in the user's HTTP request. A user agent header associated with the HTTP request is then matched against various profiles stored in a configuration file (e.g., an XML file) or database, for example. That is, the configuration file is created beforehand based upon known device profiles and browser/markup language types, and updated as new devices/browsers/markup languages come online and attempt to access the service. Of course, other approaches for determining the markup language(s) supported by a given wireless device may be used, such as those set forth in the above-noted article by Bling, which is hereby incorporated herein in its entirety by reference.

In some circumstances, the account provisioning module **27** may not be able to determine the type of markup language supported by the given wireless communications device **21,** at Block **50'.** Using the above example, this would occur if a device profile for the given wireless communications device **21** was not previously stored in the configuration file or database. If this is the case, then the account provisioning module **27** may provide a default markup language provisioning template(s) to the given wireless communications device **21** at Block **51'.** The default markup language provisioning template may include only common markup language elements supported by all of the plurality of different markup languages. Thus, in accordance with the present example, the default template may be a relatively simple WML template that supports only features that are also supported by XHTML, as will be appreciated by those skilled in the art.

If the account provisioning module **27** is able to determine the markup language(s) supported by the given wireless communications device **21,** it then provides the appropriate or corresponding provisioning templates to the given wireless communications device based upon the determined supported markup language, at Blocks **52'-54'.** More particularly, if it is determined that the given wireless communications device **21** supports only WML, then a WML-based provisioning template(s) is provided to the device. However, if the account provisioning module **27** determines that the given wireless communications device **21** supports XHTML, or both XHTML and WML, then an XHTML template(s) is provided to the given device. That is, if the given wireless communications device **21** supports two or more markup languages, then the account provisioning module may provide the respective markup language provisioning template(s) based upon the most capable one of the supported markup languages. In other words, the account provisioning module **27** uses the markup language that has the most features, which in the present example is XHTML, as discussed above.

Two exemplary markup language provisioning templates are shown in FIGS. 2 and 3. Because of the relatively limited room on a wireless communications device display **29,** it may be advantageous to use a series of successive templates for collecting user input to provision an email account with the email server **24.** This is sometimes referred to as a "deck of cards" approach, as templates are "dealt" to the device one at a time as a user fills in one template and submits the results back to the email server **24.** This approach may also be helpful because initially collecting certain preliminary information (such as a unique device identification (ID) may allow the account provisioning module **27** to retrieve additional information about the user from a database (e.g., a database maintained by the wireless communications system provider or email aggregation service provider, etc.). This may reduce the amount of information the account provisioning module **27** has to ask the user for, and also allow certain form fields to be "auto-filled" for verification by the user, also saving the user work, as will be appreciated by those skilled in the art.

A first exemplary WML provisioning template **30** (FIG. 2) is provided to the given wireless communications device **21** so that the user thereof can enter the unique IDs associated with the given device, namely a PIN and an International Mobile Equipment Identity (IMEI), as will be appreciated by those skilled in the art. Of course, different unique IDs may be used in different embodiments. Here, since the exemplary embodiment of WML does not support buttons, the user is provided with a "next" link to submit the entered information to the email server **24** (as well as a "cancel" link to cancel the operation).

A second exemplary XHTML template is for a user to enter other provisioning parameters, such as the email address(es) and password(s) associated with the email account(s) that the user wants the email server **24** to forward email messages from. Here, the browser of the given wireless communications device **21** displays clickable "next account," "done," and "cancel" buttons **32, 33, 34** for the user, since the button feature is supported in XHTML. Further exemplary provisioning parameters that may be used in some embodiments may include a user name, preferred language, etc. Of course, different combinations of the above-noted (or other) provisioning parameters may be used in different embodiments.

Once the requisite provisioning parameter(s) is returned from the given wireless communications device **21** via the markup language template(s), the account provisioning module **27** is then able to generate a provisioned email account for the given wireless communications device based upon the provisioning parameter(s), at Block **43.** That is, the account provisioning module **27** stores the appropriate information needed to retrieve and forward emails from the user's designated email box(es) **26** to the given wireless communications device **21,** as discussed above. The MUA module **28** may then begin forwarding emails to the given wireless communications device **21** based upon the provisioned email account therefore, at Block **44,** thus concluding the illustrated method (Block **45**).

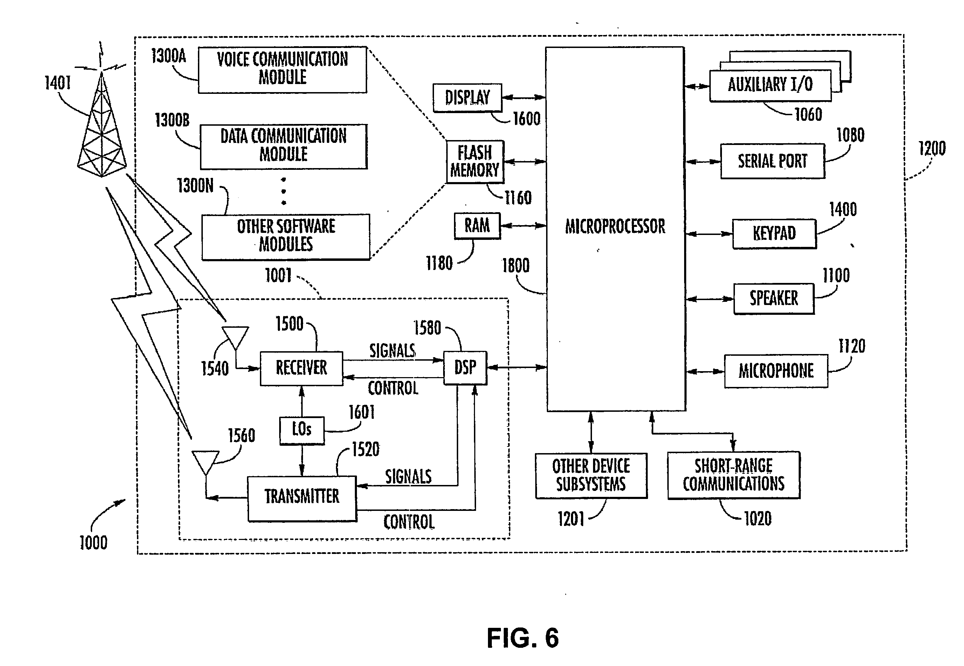

Exemplary components of a hand-held mobile wireless communications device **1000** that may be used in accordance the system **20** is further described in the example below with reference to FIG. 6. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem 1001.

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included as long as they fall within the scope of the appended claims.

## Claims

1. An electronic mail, email, server (24) for use with a plurality of wireless communications devices (21a-21n) each supporting at least two markup languages from among a plurality of different markup languages, the email server (24) comprising:
an account provisioning module (27) for determining the at least two markup languages supported by a given wireless communications device (21a-21n), providing a respective markup language provisioning template to the given wireless communications device (21a-21n) based upon the one of the at least two markup languages that has the most features, and generating a provisioned email account for the given wireless communications device (21a-21n) based upon at least one provisioning parameter returned via the at least one markup language provisioning template; and
a mail-user agent module (28) for forwarding emails to the given wireless communications device (21a-21n) based upon the provisioned email account therefor.

2. An email communications system (20) comprising:
a plurality of wireless communications devices (21a-21n) each supporting at least two markup language languages from among a plurality of different markup languages; and
an electronic mail, email, server (24) according to Claim 1.

3. The email server (24) of Claim 1 wherein said account provisioning module (27) provides a default markup language provisioning template to said given wireless communications device (21a-21n) if said account provisioning module (27) is unable to determine the at least two supported markup languages.

4. The email server (24) of Claim 3 wherein the default markup language provisioning template comprises only markup language elements supported by all of the plurality of different markup languages.

5. The email server (24) of Claim 1 wherein the plurality of markup languages comprises a Wireless Markup Language (WML) and an Extensible Hypertext Markup Language (XHTML).

6. The email server (24) of Claim 1 wherein each wireless communications device (21a-21n) has at least one unique identification (ID) associated therewith; and wherein the at least one provisioning parameter returned via the at least one markup language provisioning template comprises the at least one unique ID of the given wireless communications device (21a-21n).

7. The email server (24) of Claim 1 wherein the at least one provisioning parameter returned via the at least one markup language provisioning template comprises at least one email address.

8. An electronic mail, email, communications method for a plurality of wireless communications devices (21a-21n) each supporting at least two markup languages from among a plurality of different markup languages, the method comprising:
determining the at least two markup languages supported by a given wireless communications device (21a-21n) ;
providing a respective markup language provisioning template to the given wireless communications device (21a-21n) based upon the one of the at least two markup languages that has the most features;
generating a provisioned email account for the given wireless communications device (21a-21n) based upon at least one provisioning parameter returned via the at least one markup language provisioning template; and
forwarding emails to the given wireless communications device (21a-21n) based upon the provisioned email account therefor.

9. The method of Claim 8 wherein each wireless communications device (21a-21n) has at least one unique identification (ID) associated therewith; and wherein the at least one provisioning parameter returned via the at least one markup language provisioning template comprises the at least one unique ID of the given wireless communications device (21a-21n).

10. The method of Claim 8 wherein the at least one provisioning parameter returned via the at least one markup language provisioning template comprises at least one email address.

## Patentansprüche

1. "Elektronische Mail (Email)"-Server (24) zur Verwendung mit einer Vielzahl von drahtlosen Kommunikationsvorrichtungen (21a-21n), die jeweils zumindest zwei Auszeichnungssprachen aus einer Vielzahl von unterschiedlichen Auszeichnungssprachen unterstützen, wobei der Email-Server (24) aufweist:
ein Konto-Bereitstellungsmodul (27) zum Bestimmen der zumindest zwei Auszeichnungssprachen, die von einer gegebenen drahtlosen Kommunikationsvorrichtung (21a-21n) unterstützt werden, Vorsehen einer jeweiligen Auszeichnungssprache-Bereitstellungs-Vorlage bzw. -Templates für die gegebene drahtlose Kommunikationsvorrichtung (21a-21n) basierend auf der einen der zumindest zwei Auszeichnungssprachen, die die meisten Merkmale hat, und Erzeugen eines bereitgestellten Email-Kontos für die gegebene drahtlose Kommunikationsvorrichtung (21a-21n) basierend auf zumindest einem Bereitstellungsparameter, der über die zumindest eine Auszeichnungssprache-Bereitstellungs-Vorlage zurückgegeben wird; und
ein Mail-Benutzer-Agent-Modul (28) zum Weiterleiten von Emails an die gegebene drahtlose Kommunikationsvorrichtung (21a-21n) basierend auf dem dafür bereitgestellten Email-Konto.

2. Email-Kommunikationssystem (20), das aufweist:
eine Vielzahl von drahtlosen Kommunikationsvorrichtungen (21a-21n), die jeweils zumindest zwei Auszeichnungssprachen aus einer Vielzahl von unterschiedlichen Auszeichnungssprachen unterstützen; und
einen "elektronische Mail (Email)"-Server (24) gemäß Anspruch 1.

3. Email-Server (24) gemäß Anspruch 1, wobei das Konto-Bereitstellungsmodul (27) eine Standard-Auszeichnungssprache-Bereitstellungs-Vorlage für die gegebene drahtlose Kommunikationsvorrichtung (21a-21n) vorsieht, wenn das Konto-Bereitstellungsmodul (27) die zumindest zwei unterstützten Auszeichnungssprachen nicht bestimmen kann.

4. Email-Server (24) gemäß Anspruch 3, wobei die Standard-Auszeichnungssprache-Bereitstellungs-Vorlage nur Auszeichnungsspracheelemente aufweist, die von allen der Vielzahl von unterschiedlichen Auszeichnungssprachen unterstützt werden.

5. Email-Server (24) gemäß Anspruch 1, wobei die Vielzahl von Auszeichnungssprachen WML (Wireless Markup Language) und XHTML (Extensible Hypertext Markup Language) aufweisen.

6. Email-Server (24) gemäß Anspruch 1, wobei jede drahtlose Kommunikationsvorrichtung (21a-21n) zumindest eine eindeutige Identifikation (ID - identification) zugehörig hat; und
wobei der zumindest eine Bereitstellungsparameter, der über die zumindest eine Auszeichnungssprache-Bereitstellungs-Vorlage zurückgegeben wird, die zumindest eine eindeutige ID der gegebenen drahtlosen Kommunikationsvorrichtung (21a-21n) aufweist.

7. Email-Server (24) gemäß Anspruch 1, wobei der zumindest eine Bereitstellungsparameter, der über die zumindest eine Auszeichnungssprache-Bereitstellungs-Vorlage zurückgegeben wird, zumindest eine Email-Adresse aufweist.

8. "Elektronische Mail (Email)"-Kommunikationsverfahren für eine Vielzahl von drahtlosen Kommunikationsvorrichtungen (21a-21n), die jeweils zumindest zwei Auszeichnungssprachen aus einer Vielzahl von unterschiedlichen Auszeichnungssprachen unterstützen, wobei das Verfahren aufweist:
Bestimmen der zumindest zwei Auszeichnungssprachen, die von einer gegebenen drahtlosen Kommunikationsvorrichtung (21a-21n) unterstützt werden;
Vorsehen einer jeweiligen Auszeichnungssprache-Bereitstellungs-Vorlage für die gegebene drahtlose Kommunikationsvorrichtung (21a-21n) basierend auf der einen der zumindest zwei Auszeichnungssprachen, die die meisten Merkmale hat;
Erzeugen eines bereitgestellten Email-Kontos für die gegebene drahtlose Kommunikationsvorrichtung (21a-21n) basierend auf zumindest einem Bereitstellungsparameter, der über die zumindest eine Auszeichnungssprache-Bereitstellungs-Vorlage zurückgegeben wird; und
Weiterleiten von Emails an die gegebene drahtlose Kommunikationsvorrichtung (21a-21n) basierend auf dem dafür bereitgestellten Email-Konto.

9. Verfahren gemäß Anspruch 8, wobei jede drahtlose Kommunikationsvorrichtung (21a-21n) zumindest eine eindeutige Identifikation (ID - identification) zugehörig hat; und wobei der zumindest eine Bereitstellungsparameter, der über die zumindest eine Auszeichnungssprache-Bereitstellungs-Vorlage zurückgegeben wird, die zumindest eine eindeutige ID der gegebenen drahtlosen Kommunikationsvorrichtung (21a-21n) aufweist.

10. Verfahren gemäß Anspruch 8, wobei der zumindest eine Bereitstellungsparameter, der über die zumindest eine Auszeichnungssprache-Bereitstellungs-Vorlage zurückgegeben wird, zumindest eine Email-Adresse aufweist.

## Revendications

1. Serveur de courrier électronique (24), ou courriel, destiné à être utilisé avec une pluralité de dispositifs de communication sans fil (21a-21n) acceptant chacun au moins deux langages de balisage parmi une pluralité de langages de balisage différents, le serveur de courriel (24) comprenant :
un module de mise à disposition de compte (27) destiné à déterminer les au moins deux langages de balisage acceptés par un dispositif de communication sans fil donné (21a-21n), à fournir un modèle de mise à disposition de langage de balisage respectif au dispositif de communication sans fil donné (21a-21n) sur la base de l'un des au moins deux langages de balisage qui possède le plus grand nombre de fonctionnalités, et à générer un compte de courriel mis à disposition pour le dispositif de communication sans fil donné (21a-21n) sur la base d'au moins un paramètre de mise à disposition renvoyé par l'intermédiaire de l'au moins un modèle de mise à disposition de langage de balisage ; et
un module d'agent utilisateur de courrier (28) destiné à réexpédier des courriels au dispositif de communication sans fil donné (21a-21n) sur la base du compte de courriel mis à disposition pour celui-ci.

2. Système de communication de courriel (20) comprenant :
une pluralité de dispositifs de communication sans fil (21a-21n) acceptant chacun au moins deux langages de balisage parmi une pluralité de langages de balisage différents ; et
un serveur de courrier électronique (24) ou courriel, selon la revendication 1.

3. Serveur de courriel (24) selon la revendication 1, dans lequel ledit module de mise à disposition de compte (27) fournit un modèle de mise à disposition de langage de balisage par défaut audit dispositif de communication sans fil donné (21a-21n) si ledit module de mise à disposition de compte (27) est incapable de déterminer les au moins deux langages de balisage acceptés.

4. Serveur de courriel (24) selon la revendication 3, dans lequel le modèle de mise à disposition de langage de balisage par défaut ne comprend que les éléments de langage de balisage acceptés par la totalité de la pluralité de langages de balisage différents.

5. Serveur de courriel (24) selon la revendication 1, dans lequel la pluralité de langages de balisage comprend un langage de balisage sans fil (WML) et un langage de balisage hypertexte extensible (XHTML).

6. Serveur de courriel (24) selon la revendication 1, dans lequel chaque dispositif de communication sans fil (21a-21n) comporte au moins un identifiant (ID) unique associé à celui-ci ; et dans lequel l'au moins un paramètre de mise à disposition renvoyé par l'intermédiaire de l'au moins un modèle de mise à disposition de langage de balisage comprend l'au moins un ID unique du dispositif de communication sans fil donné (21a-21n).

7. Serveur de courriel (24) selon la revendication 1, dans lequel l'au moins un paramètre de mise à disposition renvoyé par l'intermédiaire de l'au moins un modèle de mise à disposition de langage de balisage comprend au moins une adresse de courriel.

8. Procédé de communication de courrier électronique, ou courriel, destiné à une pluralité de dispositifs de communication sans fil (21a-21n) acceptant chacun au moins deux langages de balisage parmi une pluralité de langages de balisage différents, le procédé consistant à :
déterminer les au moins deux langages de balisage acceptés par un dispositif de communication sans fil donné (21a-21n) ;
fournir un modèle de mise à disposition de langage de balisage respectif au dispositif de communication sans fil donné (21a-21n) sur la base de l'un des au moins deux langages de balisage possédant le plus grand nombre de fonctionnalités ;
générer un compte de courriel mis à disposition pour le dispositif de communication sans fil donné (21a-21n) sur la base d'au moins un paramètre de mise à disposition renvoyé par l'intermédiaire de l'au moins un modèle de mise à disposition de langage de balisage ; et
réexpédier des courriels au dispositif de communication sans fil donné (21a-21n) sur la base du compte de courriel mis à disposition pour celui-ci.

9. Procédé selon la revendication 8, dans lequel chaque dispositif de communication sans fil (21a-21n) a au moins un identifiant (ID) unique qui lui est associé ; et dans lequel l'au moins un paramètre de mise à disposition renvoyé par l'intermédiaire de l'au moins un modèle de mise à disposition de langage de balisage comprend l'au moins un ID unique du dispositif de communication sans fil donné (21a-21n).

10. Procédé selon la revendication 8, dans lequel l'au moins un paramètre de mise à disposition renvoyé par l'intermédiaire de l'au moins un modèle de mise à disposition de langage de balisage comprend au moins une adresse de courriel.
